# EUROPEAN PATENT APPLICATION

(11) **EP 4 339 583 A1**
(43) Date of publication of application: **20.03.2024**
(21) Application number: 22807450.6
(22) Date of filing: 09.05.2022
(51) Int. Cl.: G01M 99/00

(54) **ESTIMATION DEVICE, ESTIMATION METHOD, PROGRAM, AND TRAINED MODEL GENERATION DEVICE**

(30) Priority: 11.05.2021 JP 2021080622
(71) Applicant: BRIDGESTONE CORPORATION, Chuo-ku Tokyo 104-8340 (JP)
(72) Inventor: SAKURAI, Ryo, Tokyo 104-8340 (JP); JO, Taketomo, Tokyo 104-8340 (JP); URATA, Tomohiro, Tokyo 104-8340 (JP)
(74) Representative: Marks & Clerk LLP
(86) International application number: PCT/JP2022/019726
(87) International publication number: WO 2022/239749

(57) **Abstract**

An estimation device inputs a physical quantity indicating plural member characteristics for an estimation target member into a learning model that employs as training data plural sets of a physical quantity indicating plural member characteristics of different types which change in time series according to deformation of a linearly- or nonlinearly-deforming member and a physical quantity indicating a performance state related to deformation of the member, and that has been trained by being input with physical quantities indicating the plural member characteristics so as to output physical quantities indicating the performance state related to deformation of the member, and estimates a physical quantity indicating a performance state related to deformation of the estimation target member.

## Description

### Technical Field

The present disclosure relates to an estimation device, an estimation method, a program, and a learning model generation device.

### Background Art

Hitherto, when a member that includes an elastic body, such as a spring member, a rubber member, or the like, and that is deformable by force being imparted thereto is utilized in a device, then a flaw occurs in the device when a defect occurs in the elastic body containing member. The flaw in the device is accordingly eliminated by replacing the elastic body containing member in which a defect has occurred. As technology to identify defects in members including elastic bodies, technology to analyze defects occurring in elastic bodies such as rubber members is known (see, for example, https://ieeexplore.ieee.org/document/8511330). Nonlinear models of Pneumatic Artificial Muscles (PAMs) are employed in this technology that focuses on unknown parameters to analyze defects in PAMs. In such analysis, changes in dynamics, such as the steady-state response to increasing contraction movements, are measured for both a defective state in which a hole has been opened in part of the PAM and a normal state thereof, these changes in dynamics are then associated with changes to a parameter of the nonlinear model, and classification is performed into defective states or normal states.

### SUMMARY OF INVENTION

A first aspect of the present disclosure is an estimation device including an estimation section. The estimation section inputs a physical quantity indicating a plurality of member characteristics for an estimation target member into a learning model that: employs, as training data, a plurality of sets of a physical quantity indicating a plurality of member characteristics of different types which change in time series according to deformation of a linearly- or nonlinearly-deforming member and a plurality of sets of a physical quantity indicating a performance state related to deformation of the member, and has been trained by being input with physical quantities indicating the plurality of member characteristics so as to output physical quantities indicating the performance state related to deformation of the member; and estimates a physical quantity indicating a performance state related to deformation of the estimation target member.

### BRIEF DESCRIPTION OF DRAWINGS

Fig. 1 is a block diagram illustrating an example of a functional configuration of an elastic body performance estimation device according to a first exemplary embodiment.
Fig. 2 is an explanatory diagram of a member according to the first exemplary embodiment.
Fig. 3 is a diagram illustrating an example of a structure of a member according to the first exemplary embodiment.
Fig. 4 is an explanatory diagram regarding training processing for training a learning model according to the first exemplary embodiment.
Fig. 5 is a block diagram illustrating an example of a measurement device according to the first exemplary embodiment.
Fig. 6 is a diagram illustrating an example of member characteristics according to the first exemplary embodiment.
Fig. 7 is a diagram illustrating an electrical characteristic under a physical environment according to the first exemplary embodiment.
Fig. 8 is a flowchart illustrating an example of training data collection processing according to the first exemplary embodiment.
Fig. 9A is a diagram illustrating an example of an electrical characteristic collected with a measurement device according to the first exemplary embodiment.
Fig. 9B is a diagram illustrating an example of a pressure characteristic collected with a measurement device according to the first exemplary embodiment.
Fig. 10 is a diagram illustrating an example of an electrical characteristic in an operation cycle of a performance indicator according to the first exemplary embodiment.
Fig. 11 is an explanatory diagram regarding training processing in a training processing section according to the first exemplary embodiment.
Fig. 12 is a flowchart illustrating an example of a flow of training processing according to the first exemplary embodiment.
Fig. 13 is a block diagram illustrating an example of a device to realize various functions of an elastic body performance estimation device according to the first exemplary embodiment.
Fig. 14 is a flowchart illustrating an example of a flow of estimation processing according to the first exemplary embodiment.
Fig. 15 is a diagram illustrating verification results of verified performance states of a rubber actuator.
Fig. 16 is a block diagram illustrating a functional configuration of an elastic body performance estimation device of a modified example.
Fig. 17 is an explanatory diagram of training processing in a training processing section according to a second exemplary embodiment.
Fig. 18 is a flowchart illustrating an example of a flow of training processing according to the second exemplary embodiment.
Fig. 19 is an explanatory diagram regarding training processing in a training processing section according to a third exemplary embodiment.
Fig. 20 is a flowchart illustrating an example of a flow of training processing according to the third exemplary embodiment.

### DESCRIPTION OF EMBODIMENTS

An elastic body containing member suffers a gradual or rapid drop in performance related to deformation due to factors such as the conditions of use, ageing, and the like. This means that even when defective states can be classified, it is still difficult to identify how damage to an elastic body containing member, such as a defect, is going to affect the performance related to deformation. For example, in cases in which control is performed on a device employing an elastic body containing member, a device is formed under an assumption of a performance related to deformation of the elastic body containing member. The elastic body containing member suffers a gradual or rapid drop in the performance related to deformation due to factors such as the conditions of use, ageing, and the like. This means that there is a demand to identify the performance related to deformation of the elastic body containing member. However, measures taken after a defect has occurred in an elastic body containing member, such as replacing the member, lead to halting the device during operation thereof, and so there is room for improvement therein.

The present disclosure is able to estimate performance related to deformation of a member prior to a flaw occurring in the member.

A first aspect of technology disclosed herein is an estimation device including an estimation section. The estimation section inputs a physical quantity indicating plural member characteristics for an estimation target member into a learning model that employs as training data plural sets of a physical quantity indicating plural member characteristics of different types which change in time series according to deformation of a linearly- or nonlinearly-deforming member and a physical quantity indicating a performance state related to deformation of the member, and that has been trained by being input with physical quantities indicating the plural member characteristics so as to output physical quantities indicating the performance state related to deformation of the member, and the estimation section estimates a physical quantity indicating a performance state related to deformation of the estimation target member.

A second aspect is the estimation device of the first aspect, wherein the member has an electrical characteristic that changes according to the deformation, the physical quantity indicating the plural member characteristics includes a first physical quantity that indicates a pressure characteristic for deforming the member and a second physical quantity that indicates the electrical characteristic that changes according to the deformation of the member, the physical quantity indicating the performance state related to deformation of the member includes a third physical quantity that indicates a number of repetitions of deformation of the member, and the learning model is trained so as to output the third physical quantity with the first physical quantity and the second physical quantity as inputs.

A third aspect is the estimation device of the second aspect, wherein the member includes an elastic body that is formed with a hollow inside and that generates a contraction force in a specific direction when a pressurized fluid is supplied inside the hollow, the first physical quantity is a pressure characteristic indicating plural pressure values in a time series when the pressurized fluid is supplied and the pressurized fluid supply is cancelled, the second physical quantity is an electrical characteristic indicating plural electrical resistance values in a time series of the elastic body that change according to the first physical quantity, and the third physical quantity is a performance indicator indicating a performance state for plural respective repetition number groups that result from dividing a predetermined specific number of repetitions, as a physical quantity indicating a performance state of the member when deformable while sustaining a specific performance, into plural levels.

A fourth aspect is the estimation device of the second aspect, the member includes an elastic body that is formed with a hollow inside and that generates a contraction force in a specific direction when a pressurized fluid is supplied inside the hollow, the first physical quantity is a pressure characteristic indicating plural pressure values in a time series when the pressurized fluid is supplied and the pressurized fluid supply is cancelled, the second physical quantity is an electrical characteristic indicating plural electrical resistance values in a time series of the elastic body that change according to the first physical quantity, and the third physical quantity is a product lifespan indicator that indicates a performance state from a performance state at the number of repetitions of deformation of the member until a predetermined specific number of repetitions as a performance state of the member when deformable while sustaining a specific performance.

A fifth aspect is the estimation device of any one of the first aspect to the fourth aspect, wherein the learning model is a model generated by training using a recurrent neural network.

A sixth aspect is the estimation device of any one of the first aspect to the fifth aspect, wherein the learning model is a model generated by training using a network by reservoir computing.

A seventh aspect is the estimation device of any one of the first aspect to the fifth aspect, wherein the learning model is a model generated by training using a network by physical reservoir computing employing a reservoir accumulated with plural sets of a physical quantity indicating an operation state of the member, a physical quantity indicating a member characteristic that changes according to the deformation, and a physical quantity indicating a performance of the member.

An eighth aspect is an estimation method including a computer inputting a physical quantity indicating plural member characteristics for an estimation target member into a learning model that employs as training data plural sets of a physical quantity indicating plural member characteristics of different types which change in time series according to deformation of a linearly- or nonlinearly-deforming member and a physical quantity indicating a performance state related to deformation of the member, and that has been trained by being input with physical quantities indicating the plural member characteristics so as to output physical quantities indicating the performance state related to deformation of the member, and the computer estimating a physical quantity indicating a performance state related to deformation of the estimation target member.

A ninth aspect is program that causes a computer to function as an estimation section. The estimation section inputs a physical quantity indicating plural member characteristics for an estimation target member into a learning model that employs as training data plural sets of a physical quantity indicating plural member characteristics of different types which change in time series according to deformation of a linearly- or nonlinearly-deforming member and a physical quantity indicating a performance state related to deformation of the member, and that has been trained by being input with physical quantities indicating the plural member characteristics so as to output physical quantities indicating the performance state related to deformation of the member, and the estimation section estimates a physical quantity indicating a performance state related to deformation of the estimation target member.

A tenth aspect is a learning model generation device including an acquisition section that acquires plural sets of a physical quantity indicating plural member characteristics of different types which change in time series according to deformation of a linearly- or nonlinearly-deforming member and a physical quantity indicating a performance state related to deformation of the member, and a learning model generation section that based on results of the acquisition by the acquisition section generates a learning model that is input with physical quantities indicating the plural member characteristics, and that is trained so as to output physical quantities indicating the performance state related to deformation of the member.

The present disclosure enables a performance related to deformation of a member to be estimated prior to occurrence of a defect or flaw in the member.

Detailed description follows regarding an exemplary embodiment to implement technology disclosed herein, with reference to the drawings.

Note that the same reference numerals will be appended throughout the drawings to configuration elements and processing performing the same operation/function, and duplicate explanation thereof will sometimes be omitted as appropriate. Moreover, the present disclosure is not limited to any of the exemplary embodiments described below, and appropriate modifications may be implemented thereto within a range of the object of the present disclosure. Moreover, although in the present disclosure description follows regarding estimation of a physical quantity related to a member that mainly undergoes nonlinear deformation, obviously the present disclosure is applicable to estimation of a physical quantity related to a member that undergoes linear deformation.

Reference in the present disclosure to a "member" encompasses materials that deform nonlinearly, and that have an electrical characteristic that changes according to deformation. An "elastic body" is an example of a member, and encompasses soft materials such as rubber, foamed materials, resin materials, and the like. Moreover, an "elastic contraction body" is an example of an elastic body, and encompasses a member that generates a contraction force in a specific direction due to being imparted with a physical quantity. The specific direction a contraction force is generated in may be a straight line direction indicating elongation-compression as expressed in two dimensions, and may be a curvilinear direction indicating flexing as expressed in three dimensions. Moreover, the elastic contraction body includes a member that is formed with a hollow portion inside, and that generates a contraction force in a specific direction by a pressurized fluid being supplied inside the hollow portion.

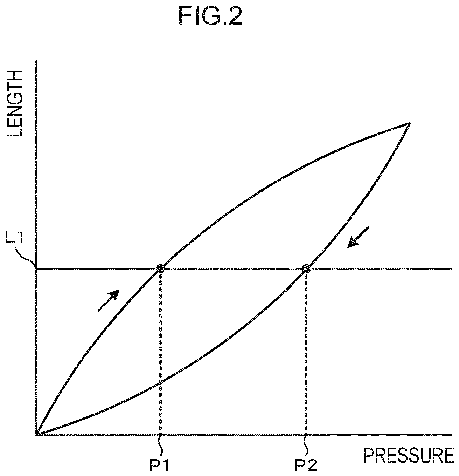

A soft elastic body such as a rubber member exhibits nonlinear behavior in response to imparted force. For example from the perspective of deformation change, when looking at two dimensional deformation change, a distance of elongation-compression in a given direction (for example a straight line direction) in response to imparted force (namely, a physical quantity or energy) changes in a nonlinear manner (see Fig. 2). For example, in an elastic body that changes length according to a magnitude of imparted pressure, the characteristics of length change differ according to a direction of increase or decrease in pressure (for example, there is both a pressure P1 and a pressure P2 that result in the same length L1).

Moreover, sometimes performance of a member containing a soft elastic body, such as a rubber member, deteriorates from the performance when initially manufactured (for example, a performance indicating an expansion-contraction force) due to repeated deformation such as expansion-contraction (elongation-compression for two dimensional deformation change). However, for a member that undergoes nonlinear deformation, the estimation device of the present disclosure employs a pre-trained learning model to estimate a physical quantity indicating a performance state related to deformation of the member, prior to a defect or flaw occurring in the member.

More specifically, the estimation device of the present disclosure includes a learning model. The learning model is trained using plural training data in which physical quantities indicating plural member characteristics and physical quantities indicating performance states of the member have been associated with each other. The physical quantities indicating the plural member characteristics indicate physical quantities that indicate plural member characteristics of different types that change in a time series according to deformation. This training is training so as to output a physical quantity indicating a performance state of the member by inputting the physical quantities indicating the plural member characteristics. This trained learning model is then employed, the physical quantities indicating the plural member characteristics of an estimation target member are input thereto, and the output therefrom is estimated as the physical quantity indicating the performance state of the estimation target member.

### First Exemplary Embodiment

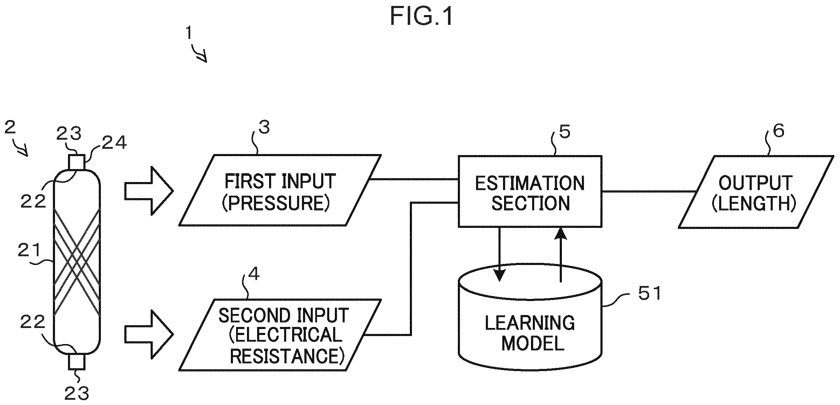

Fig. 1 illustrates an example of a configuration of an elastic body performance estimation device 1 serving as an estimation device of the present disclosure.

Note that in the present exemplary embodiment, description follows regarding a case in which, in order to ascertain a physical quantity of an elastic body, as an example, the technology disclosed herein is applied to an elastic contraction body that includes a soft elastic body such as a rubber member from out of elastic bodies that deform nonlinearly, and that generates contraction force in a specific direction by being imparted with a physical quantity. Namely, in the present exemplary embodiment description follows regarding application of the technology disclosed herein to estimation processing for estimating a performance state of an elastic contraction body.

Description follows regarding a case in which known technology of an airbag type of elastic contraction body is employed as an example of an elastic contraction body (see, for example, Japanese Patent Application Publication No. S52-40378).

An example of the airbag type of elastic contraction body (hereafter referred to as rubber actuator 2) is configured including a main body 21 including a tube shaped body configured from a soft elastic body such as a rubber member, with the outer periphery of the tube shaped body covered with a braided reinforcement structure made from organic or inorganic high tensile strength fibers, such as aromatic polyamide fibers for example, and with openings 22 at both ends thereof sealed by closure members 23. The rubber actuator 2 is configured to perform diameter enlargement deformation when a pressurized fluid is supplied into an internal hollow therein through a connection port 24 provided in the closure member 23, so as to thereby generate a contraction force along an axial direction. In such a rubber actuator, the length of the rubber actuator 2 changes due to diameter enlargement deformation. However, using the rubber actuator 2 as an application target is merely an example thereof, and the estimation device of the present disclosure is applicable to members including elastic contraction bodies or elastic body containing members other than the rubber actuator 2. Moreover, the estimation device of the present disclosure is applicable to members that deform either linearly or nonlinearly due to pressure being imparted and canceled.

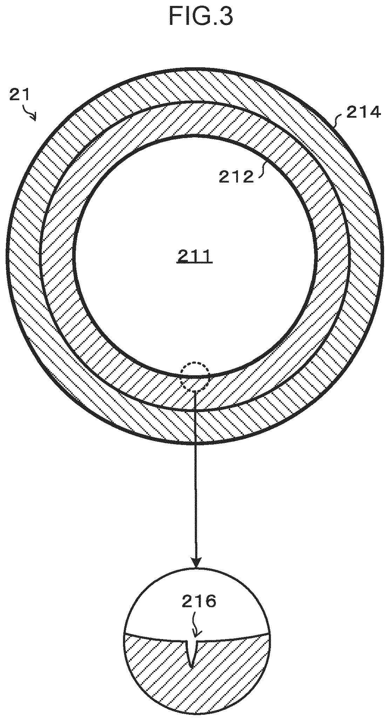

As illustrated in Fig. 3, the rubber actuator 2 includes a main body 21 including a tube shaped body 212 configured for example from a rubber member including an internal hollow 211, with an outer periphery of the tube shaped body 212 covered by a reinforcement structure 214. Diameter enlargement deformation occurs when a pressurized fluid is supplied into the internal hollow 211, and a contraction force is generated along the axial direction thereof. Shape recovery occurs when the supply of pressurized fluid is canceled (or the pressurized fluid is discharged). The contraction force is changed by an operation cycle of supplying pressurized fluid and canceling supply thereof, namely by expansion-contraction of the main body 21. The length of the rubber actuator 2 changes in a nonlinear manner according to such contraction force (see Fig. 2). In the rubber actuator 2, sometimes a flaw occurs in the main body 21 due to conditions of use, such as repeated deformation by expansion-contraction of main body 21 or ageing. For example, sometimes a flaw site 216, such as a crack or the like, occurs in part of the tube shaped body 212. Due to the flaw site 216 occurring, the performance of the rubber actuator 2 falls from a performance state (for example, a contraction force) when initially manufactured. Namely, there is a change in the performance state of the rubber actuator 2.

A flaw site that has occurred inside the rubber actuator 2 and causes a change to the performance state of the rubber actuator 2 is difficult identify by measuring the structure. Note that although it would be possible to identify the flaw site by scanning the inside of the rubber actuator 2 using a bulky apparatus capable of performing computer tomographic imaging (a CT scan), this is not realistic in practice. The present exemplary embodiment accordingly employs a learning model pre-trained on the performance state of the rubber actuator 2 to estimate the performance state relating to deformation of the rubber actuator 2. More specifically, the performance state of the rubber actuator 2 is estimated without employing a bulky apparatus prior to a situation in which a defect caused by a flaw arising in the tube shaped body 212 occurs and prior to a situation in which use becomes difficult due to the flaw.

In the present exemplary embodiment description follows regarding an example in which a physical quantity indicating a pressure characteristic and a physical quantity indicating an electrical characteristic are applied as the physical quantity indicating plural member characteristics of different types. In the following description the physical quantities indicating the member characteristics will be referred to as member characteristics. Moreover, the physical quantity indicating the pressure characteristic will be referred to as a pressure characteristic, and the physical quantity indicating the electrical characteristic will be referred to as an electrical characteristic. Regarding the pressure characteristic, a pressure characteristic indicating a time series of plural pressure values is applied as a first physical quantity to deform the rubber actuator 2. More specifically, a pressure value that changes in a time series, namely a time series of plural pressure values imparted to the rubber actuator 2 to cause deformation by pressure being imparted and canceled (operation cycling), is applied as the pressure characteristic. Moreover, as the electrical characteristic, application is made to an electrical characteristic of electrical resistance values as a second physical quantity that changes according to deformation of the rubber actuator. More specifically, an electrical resistance value that change in a time series, namely plural electrical resistance values that change in a time series by operation cycling, is applied as the electrical characteristic.

A performance indicator of the rubber actuator 2, serving as a third physical quantity indicating a number of repetitions of deformation of the rubber actuator 2, is applied as the physical quantity indicating the performance state related to member deformation. More specifically, a predetermined specific number of repetitions at which the rubber actuator 2 is deformable while sustaining a specific performance, this being a performance state where recovery is possible under contraction in a specific direction and cancellation of contraction (for example, a number of repetitions when an operation malfunction state or a flaw state has occurred) is applied as a performance indicator to indicate a performance state with respect to each group of plural repetitions arrived at by dividing into plural levels. Note that although described in detail later, in the present exemplary embodiment the performance indicator indicates one or other state from out of an initial state, an intermediate state, or a later state. The performance indicator may be understood as being a lifespan, such as a duration of sustainable performance of a member. Such cases are applicable to a product lifespan indicator expressing a lifespan of the rubber actuator 2, namely indicating a performance state from given number of repetitions up to a performance state at a predetermined specific number of repetitions as the performance state when the rubber actuator 2 is deformable while sustaining a specific performance.

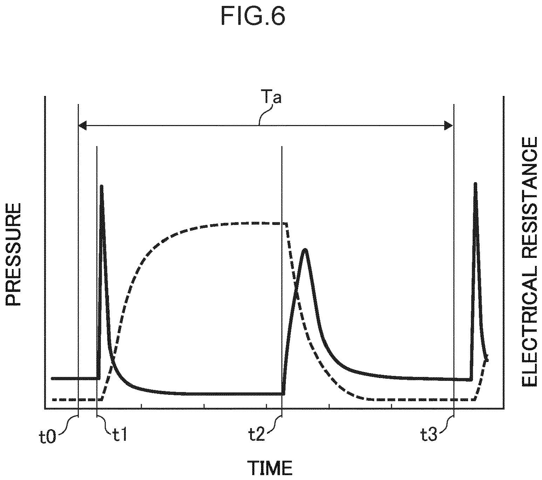

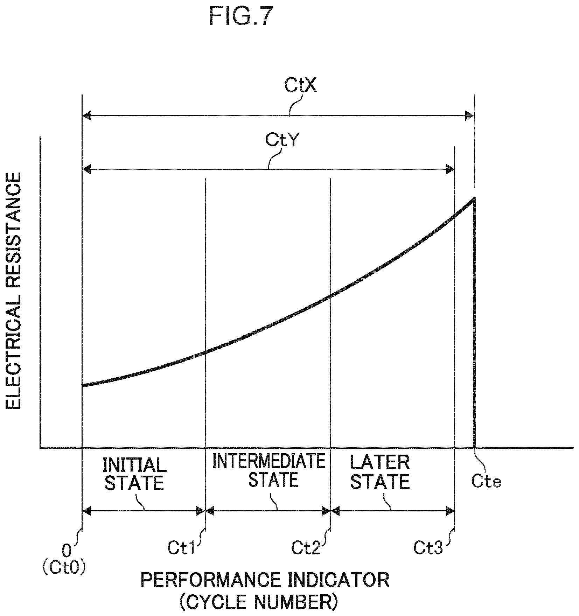

In the estimation processing of the elastic body performance estimation device 1, a learning model is employed that has been trained by performing machine learning using pressure data and electrical resistance data of the rubber actuator 2 to label performance data as the training data for the rubber actuator 2. The performance data is a physical quantity indicating the performance state of the rubber actuator 2 (i.e. a performance indicator) as described above (see Fig. 7). The pressure data is a pressure characteristic expressed by a time series of pressure values by operation cycling as described above (see Fig. 6). The electrical resistance data is the electrical characteristic expressed by a time series of plural electrical resistance values by operation cycling (see Fig. 6). The trained learning model is employed to estimate performance data of an unknown rubber actuator 2 corresponding to the pressure data and the electrical resistance data of the rubber actuator 2. Namely, the elastic body performance estimation device 1 estimates a performance state of the rubber actuator 2 that changes in a nonlinear manner under operation cycling of the rubber actuator 2. Thus even for the rubber actuator 2 that is unable to be internally inspected and that deforms in a nonlinear manner, the performance state can still be estimated without employing a bulky apparatus.

As illustrated in Fig. 1, the elastic body performance estimation device 1 includes an estimation section 5. First input data 3 indicating a magnitude of a pressure on the rubber actuator 2 (a pressure characteristic by operation cycling) are input as pressure data to the estimation section 5. Moreover, second input data 4 indicating a magnitude of an electrical characteristic of the rubber actuator 2 (the electrical characteristic by operation cycling) are input as electrical resistance data. The estimation section 5 outputs, as performance data, output data 6 indicating an estimation result of a performance state (performance indicator) of the rubber actuator 2. The estimation section 5 includes a trained learning model 51.

The learning model 51 is a trained model for deriving a performance state (the output data 6) of the rubber actuator 2 from time series accompanying deformation of the pressure characteristic (first input data 3) of the rubber actuator 2 and the electrical characteristic (the second input data 4) of the rubber actuator 2. The learning model 51 is, for example, a model that defines a trained neural network, and is expressed as a set of information about weights (strengths) of connections between respective nodes (neurons) configuring the neural network.

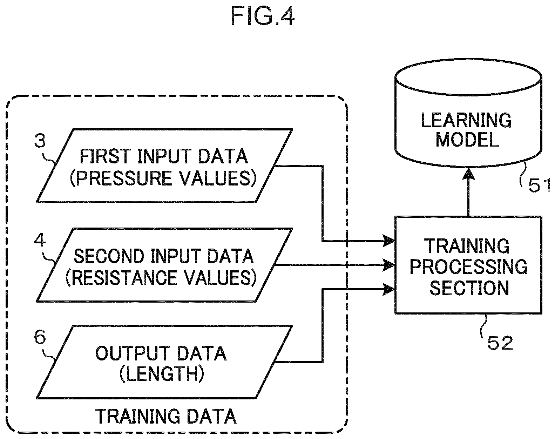

The learning model 51 is generated by training processing of a training processing section 52 (Fig. 4). The training processing section 52 performs training processing using a previously measured physical quantity of the rubber actuator 2 as a time series of the physical quantity. Namely, a large volume of data that has been measured as a time series of the member characteristic of the rubber actuator 2 is employed as the training data. The training data includes a large volume of sets that are each configured by input data including the pressure characteristic (first input data 3) and the electrical characteristic (second input data 4), and by the performance states (the output data 6) corresponding to the input data. Note that the time series physical use may, for example, be associated time series information resulting from appending information indicating measurement times to pressure values and electrical resistance values. Moreover, it may be associated time series information resulting from appending information indicating measurement times to the sets described above.

Next, description follows regarding training processing performed by the training processing section 52.

First description follows regarding training data employed in the training processing.

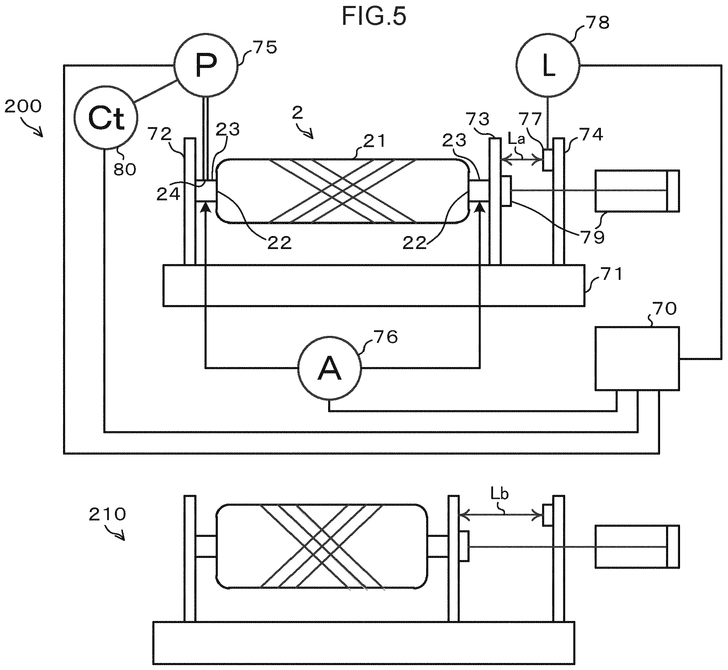

Fig. 5 illustrates an example of a measurement device 7 to measure a physical quantity of the rubber actuator 2.

In the measurement device 7, one of the closure members 23 of the rubber actuator 2 is attached to an attachment plate 72 that is fixed to a base 71, and the other of the closure members 23 is attached to a movable plate 73 that is capable of moving. A pressure sensor to detect pressure (the first physical quantity that deforms the rubber actuator 2) is included at the connection port 24 of the rubber actuator 2, and a supply section 75 that supplies a pressurized fluid to the rubber actuator 2 is in communication with the connection port 24. An electrical characteristic detection section 76 that includes a sensor to detect electrical resistance values (the second physical quantity indicating an electrical characteristic) of the rubber actuator 2 is attached to the closure members 23 at both ends of the rubber actuator 2. A fixed plate 74 is fixed to the base 71, and a distance sensor 77 such as a laser sensor that detects a distance to the movable plate 73 is attached to the fixed plate 74. The distance sensor 77 is connected to a length identification section 78. The length identification section 78 identifies a length of the rubber actuator 2 from the distance detected by the distance sensor 77. For example, the length identification section 78 stores, as initial values, a length L of the rubber actuator 2 in an initial state (indicated by initial state 200 in Fig. 5) when the pressurized fluid is not being supplied and a distance (La) detected by the distance sensor 77. The length identification section 78 is able to identify the length of the rubber actuator 2 (L = Lb - La) by subtracting a difference in distance of a state when supplied with pressurized fluid (indicated by supplied state 210 in Fig. 5) from the length in the initial state. Note that the measurement device 7 is configured with an attachable pneumatic detection section 79 configured from a load cell and a pneumatic cylinder.

Note that although the measurement device 7 described above has been described for a case including configuration to identify the length of the rubber actuator 2, identifying the length of the rubber actuator 2 is not essential in the present exemplary embodiment, and configuration for length identification may be omitted.

Moreover, a counter 80 is connected to the supply section 75. The counter 80 counts a number of cycles of operation cycling performed by supplying pressurized fluid to the rubber actuator 2 using the supply section 75 and canceling supply thereof. Configuration to count the number of cycles of operation cycling is not limited to the counter 80 connected to the supply section 75. For example, a number of times of instruction to the supply section 75 may be counted, or the number of cycles of operation cycling may be counted by another method.

The measurement device 7 includes the supply section 75, the electrical characteristic detection section 76, and a controller 70 connected to the counter 80. The controller 70 performs control of the supply section 75, acquires time series of the pressure values and the electrical resistance values of the rubber actuator 2 during operation cycling of the rubber actuator 2 and the cycle number (cumulative cycle number) of operation cycling, and stores these associated with each other. Namely, by controlling the supply of pressurized fluid, the measurement device 7 is able to acquire plural time series of data sets, including the pressure characteristic, the electrical characteristic, and the cycle number, for the rubber actuator 2 that deforms in a nonlinear manner.

More specifically, the measurement device 7 is able to acquire time series respectively for the pressure characteristic and the electrical characteristic in operation cycle units, as pressure values and electrical resistance values for each minute period of time (for example, 0.01 second) in each of these operation cycles.

Fig. 6 illustrates an example of the pressure characteristic and the electrical characteristic (member characteristics) for the rubber actuator 2. Fig. 6 illustrates member characteristics including from an measurement start time t0, through a start time t1 of pressurized fluid supply to the rubber actuator 2 and a supply cancel time t2, to the measurement start time t3 for the next operation cycle. The time from the time t0 to the time t3 illustrates one operation cycle of a single cycle Ta.

As illustrated in Fig. 6, the pressure characteristic for the rubber actuator 2 shows a rapid rise in pressure values from the start of pressurized fluid supply, and shows a rapid fall when supply is canceled. The electrical characteristic exhibits a rapid fluctuation at the start of pressurized fluid supply and when supply is canceled. Time series are measured for the pressure characteristic and the electrical characteristic in each of the operation cycles by the pressure values and electrical resistance values at each minute period of time (for example, 0.01 second). The pressure characteristic and electrical characteristic (member characteristics) measured as time series are profiles of the pressure characteristic and the electrical characteristic of an operation cycle at a cycle number (number of repetitions) when measurement is performed, and may be captured as a pattern indicating the shape of each respective waveforms.

It may be supposed that the rubber actuator 2 has an increasing trend in the number and size of flaw sites 216 (see Fig. 3), such as cracks, occurring in the tube shaped body 212 as the cycle number (cumulative cycle number) of operation cycles increases. As the number and size of the flaw sites 216 (Fig. 3) increases, the performance of the rubber actuator 2 falls from the performance (for example, performance indicated by contraction force) when initially manufactured. The electrical characteristic of the rubber actuator 2, for example a maximum value of the electrical resistance values in the operation cycle, accordingly tends to increase in situations in which the number and size of such flaw sites 216 increases.

Fig. 7 illustrates the electrical characteristic assuming a case in which a durability test is executed on the rubber actuator 2 in an ideal environment.

As illustrated in Fig. 7, the electrical characteristic of the rubber actuator 2, for example the maximum value of the electrical resistance values in the operation cycle, tends to increase with an increase in the cumulative cycle number. The rubber actuator 2 is unable to exhibit performance at an end cycle number Cte, for example a defective state occurs thereat. Taking an operable range CtX of the rubber actuator 2 as being a cycle number range from the cycle number "0" (Ct0) when in an unused state to the end cycle number Cte, then a sustainable performance range CtY of cycle number deformable while the performance of the rubber actuator 2 is sustained, is either the same as or narrower than the operable range CtX (CtX ≥ CtY). In the present exemplary embodiment, a performance indicator indicating a performance state is associated with each of the groups of plural operation cycles resulting from dividing the sustainable performance range CtY into plural levels (for example, 3 levels). More specifically, the sustainable performance range CtY is classified into 3 levels, and a performance indicator indicating an initial state, an intermediate state, or a later state is associated with each of the cycle number in each of the respective classifications. The performance indicator indicating the initial state is determined for cycle numbers in a range from the cycle number Ct0 to the cycle number Ct1, the performance indicator indicating the intermediate state is determined for cycle numbers in a range from the cycle number Ct1 to the cycle number Ct2, and the performance indicator indicating the later state is determined for cycle numbers in a range from the cycle number Ct2 to the cycle number Ct3 (≤ Cte). The performance state of the rubber actuator 2 is accordingly confirmable by identifying the cycle number.

Note that the performance indicator of the rubber actuator 2 expressed by the initial state, intermediate state, and later state may be taken as being an indicator expressing the lifespan of the rubber actuator 2. Namely, the sustainable performance range of the rubber actuator 2 is shorter in the sequence of the initial state, then the intermediate state, and then the later state. In other words, the cumulative cycle number increases in the sequence of the initial state, then the intermediate state, and then the later state. A quantity of the cycle number until reaching the end cycle number Cte when a flaw occurs in the rubber actuator 2 is reduced accordingly. This is equivalent to saying that, taking a total of the cycle number in the operable range CtX (or in the sustainable performance range CtY) as being the lifespan of the rubber actuator, then the lifespan becomes shorter in the sequence of the initial state, then the intermediate state, and then the later state.

However, in the rubber actuator 2, the way in which performance falls changes according to the conditions of use and individual differences. This means that even if the maximum value of the electrical resistance value and the cycle number has been identified, the performance indicator indicating one of the performance states from out of the initial state, intermediate state, and later state is difficult to associate as the performance state across the board for all rubber actuators 2. Thus in the present exemplary embodiment, the learning model 51 is generated so as to be capable of estimating the performance indicator corresponding to individual rubber actuators 2.

The controller 70 illustrated in Fig. 5 may be configured including a computer including a non-illustrated CPU configured so as to execute training data collection processing.

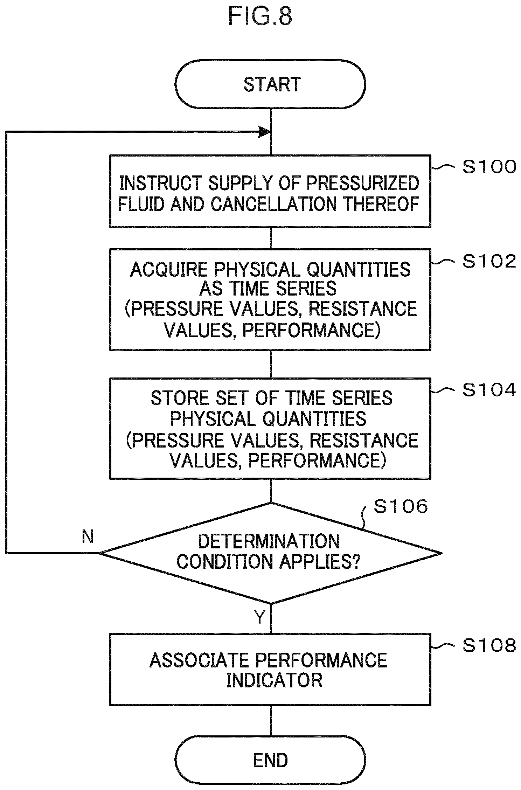

Fig. 8 illustrates an example of the training data collection processing executed by the controller 70.

As illustrated in Fig. 8, at step S100 the controller 70 instructs the supply section 75 to perform an operation cycle of supplying pressurized fluid and canceling such supply. Next at step S102, the controller 70 acquires a physical quantity set that includes a time series of pressure values (the pressure characteristic) and a time series of electrical resistance values (the electrical characteristic) for the rubber actuator 2 during the operation cycle and includes a number of cycles. Next at step S104, the physical quantity set (the physical quantity set for the current operation cycle) is temporarily stored. At step S106 the controller 70 determines whether or not a predetermined determination condition applies. Processing returns to step S100 when negative determination is made, and processing transitions to step S108 when affirmative determination is made. An end condition is employed as the determination condition in a case in which a flaw such as occurrence of a defect in the rubber actuator 2 has been detected, in a case in which the cycle number has reached a predetermined specific number as a durability test, or the like.

When affirmative determination is made at step S106, the controller 70 associates a performance indicator with the physical quantity set temporarily stored at step S108 and then ends the current processing routine. More specifically, a performance indicator is able to be associated with each set, which includes the time series of pressure values (the pressure characteristic) and electrical resistance values (the electrical characteristic) for each operation cycle in the operable range CtX or in the sustainable performance range CtY of the rubber actuator 2, together with the cycle number.

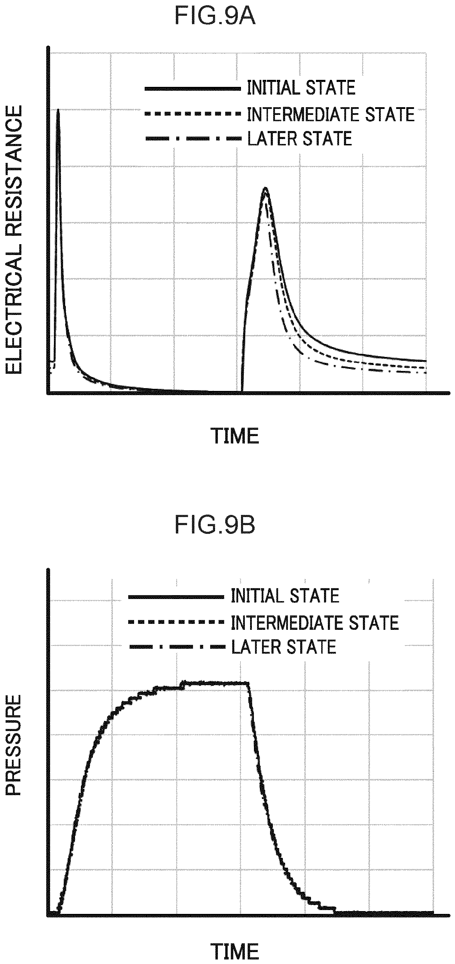

Fig. 9A illustrates an example of the electrical characteristic of the rubber actuator 2 collected by the controller 70 of the measurement device 7 according to elapsed time, and Fig. 9B illustrates an example of a pressure characteristic of the rubber actuator 2. Fig. 9A and Fig. 9B illustrate measurement results for each state of the initial state, intermediate state, and later state according to elapsed time when a durability test is performed on an unused rubber actuator 2 by repeatedly performing an operation cycle until a defect is detected therein. Note that in Fig. 9A and Fig. 9B, the electrical resistance values (the electrical characteristic) and the pressure values (the pressure characteristic) have been standardized (namely normalized) such that the maximum values match for operation cycle units. In the example illustrated, the pressure characteristic of the rubber actuator 2 is a pattern that substantially matches from the initial state to the later state (Fig. 9B). However, the electrical characteristic (the electrical resistance values) has a pattern in which there are gradually relative differences in the electrical characteristic with the elapse of time. In particular, differences appear in the electrical characteristic (electrical resistance values) in the latter halves of the operation cycles (a state in which the supply of pressurized fluid is canceled) (Fig. 9A).

The controller 70 proportionally divides the operable range CtX (or the CtY) from the cycle number Ct0 at the start of measuring the rubber actuator 2 to the end cycle number Cte into three (see Fig. 7), and associates a performance indicator with each of the three levels, the initial state, the intermediate state, and the later state. This proportional division may be division so that the numbers of cycles therein are equal, or may be proportional division using a boundary of a distinctive electrical resistance value indicating a stable electrical resistance value or the like. Operation cycles in the ranges associated with the respective performance indicators for the initial state, the intermediate state, and the later state include distinctive portions in the electrical characteristic.

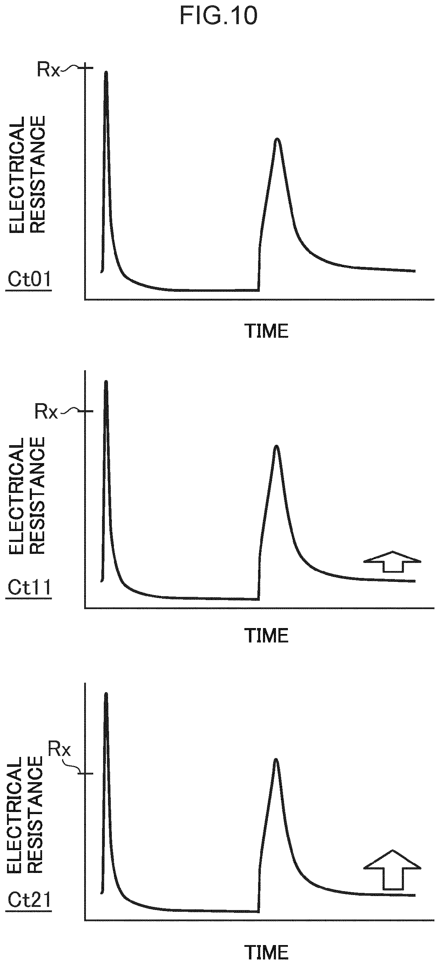

Fig. 10 illustrates an example of the electrical characteristic of operation cycles in a range associated with each performance indicator for the initial state, the intermediate state, and the later state. Fig. 10 illustrates the electrical characteristic in the cycle number Ct01 from out of the operation cycles associated with the performance indicator of the initial state illustrated in Fig. 9A. Similarly, the electrical characteristic in a cycle number Ct1 1 associated with the performance indicator of the intermediate state is illustrated, and the electrical characteristic in a cycle number Ct21 associated with the performance indicator of the later state, is illustrated. Note that the electrical characteristics illustrated in Fig. 10 are standardized (namely normalized) such that the maximum values of the electrical resistance values are matched by operation cycle unit. The electrical resistance values Rx prior to standardization are illustrated in Fig. 10 as respective examples of the electrical characteristic.

As illustrated in Fig. 10, although in the electrical characteristic the maximum values of the electrical resistance values increase as the performance state transitions from the initial state to the later state, the electrical characteristic includes one distinctive portion that is where a pattern of a profile of the electrical characteristic heads toward a stable state when supply of pressurized fluid has been cancelled. The stable state indicates that a characteristic of the fluctuation in electrical resistance values being suppressed. Another aspect is that although the minimum values of the electrical resistance values decreases along with the transition of the states, a shape of waveform gradually transitions to a flat shape on the pressurized fluid cancel side thereof (indicated by a length the arrow in Fig. 10) from a pattern that is a profile of the standardized electrical characteristic. Another aspect is that a width of fluctuation between the maximum value and the minimum value of the electrical resistance values increases along with transition from the initial state to the later state. Moreover, another distinctive portion is that a proportional drop in the electrical characteristic on the pressurized fluid cancel side, for example the proportional change in electrical resistance values, illustrates a characteristic including a distinctive portion of decreasing along with transition from the initial state to the later state. Considering how these characteristics affect the performance state of the rubber actuator 2 is an effective function of training processing.

The controller 70 is accordingly able to acquire time series of the pressure characteristic and the electrical characteristic of the rubber actuator 2 and each cycle number by performing control of the supply of pressurized fluid to the rubber actuator 2, and is able to associate and store the performance indicators therewith. Sets including the physical quantities indicating the performance states, including the pressure characteristic, the electrical characteristic, and the cycle number of the rubber actuator 2, and including the performance indicators thereof, are stored as time series in the controller 70 for use as training data.

Note that the processing routine illustrated in Fig. 8 and described above is preferably executed on plural rubber actuators 2, so as to collect more training data.

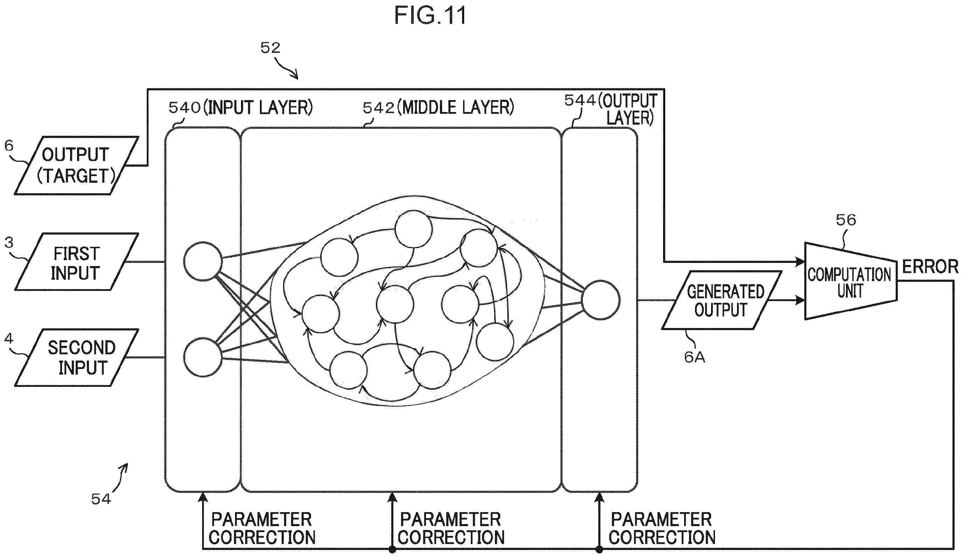

Next, description follows regarding the training processing section 52, with reference to Fig. 11.

The training processing section 52 includes a generator 54 and a computation unit 56. The generator 54 includes a function to generate an output that considers precedence relationships of the time series input.

Moreover, as training data, the training processing section 52 holds multiple sets that include the first input data 3 (the pressure characteristic) and the second input data 4 (the electrical characteristic) for each operation cycle as measured by the measurement device 7, and include the output data 6 (performance state).

In the example illustrated in Fig. 11, the generator 54 is configured by a known recurrent neural network (RNN), including an input layer 540, a middle layer 542, and an output layer 544. Recurrent neural networks (for example RNNs) are themselves known technology and so a detailed description will be omitted thereof, however the middle layer 542 includes multiple node groups (neuron groups) including inter-node connections and feedback connections. Data is input from the input layer 540 to the middle layer 542, and data of computation results of the middle layer 542 are output to the output layer 544.

More specifically, the generator 54 is a neural network that generates, from the input first input data 3 (the pressure characteristic) and second input data 4 (the electrical characteristic), generated output data 6A that indicates a performance state. The performance indicator described above is applied as the physical quantity indicating the performance state. This performance state may be a cycle number. The generated output data 6A is data of a performance state (performance indicator) of the rubber actuator 2 as estimated from the first input data 3 (the pressure characteristic) and the second input data 4 (the electrical characteristic). The generator 54 generates, from the first input data 3 (pressure) and the second input data 4 (the electrical characteristic) that have been input as time series, the generated output data indicating a performance state (performance indicator) close to a performance state (performance indicator) obtained by measurement for the performance state (performance indicator) of the rubber actuator 2 that deforms in a nonlinear manner. The generator 54 performs training using multiple first input data 3 (the pressure characteristic) and multiple second input data 4 (the electrical characteristic) so as to be able to generate the generated output data 6A closer to the measurement result of the performance state (performance indicator) of the rubber actuator.

The computation unit 56 is a computation unit that compares the generated output data 6A and the training-data output data 6, and computes an error of the comparison result. The training processing section 52 inputs the generated output data 6A and the training-data output data 6 to the computation unit 56. In response thereto, the computation unit 56 computes an error between the generated output data 6A and the training-data output data 6, and outputs a signal representing this computation result.

Based on the error computed in the computation unit 56, the training processing section 52 tunes weight parameters of the inter-node connections so as to perform training of the generator 54. More specifically, a method such as, for example, gradient descent, error backpropagation, or the like is employed to feedback the respective weight parameters of inter-node connections between the input layer 540 and the middle layer 542 of the generator 54, weight parameters of inter-node connections within the middle layer 542, and weight parameters of inter-node connections between the middle layer 542 and the output layer 544, to the generator 54. Namely, using the training-data output data 6 as the target, all the inter-node connections are optimized so as to minimize error between the generated output data 6A and the training-data output data 6.

The learning model 51 is generated by the training processing of the training processing section 52. The learning model 51 is represented by a set of information of the weight parameters (weights or strengths) of inter-node connections resulting from training by the training processing section 52.

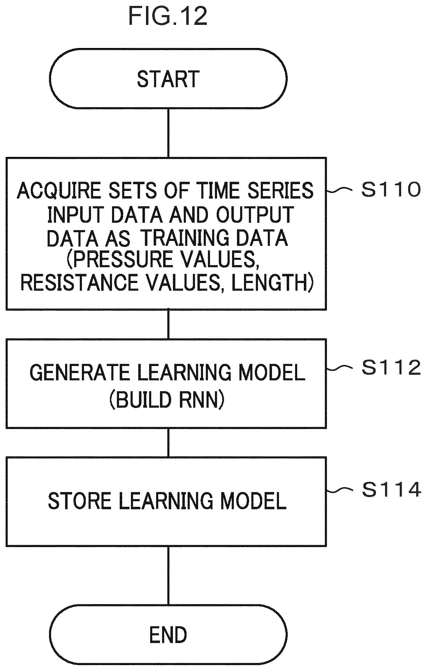

The training processing section 52 may be configured including a computer that contains a non-illustrated CPU and executes the training processing. For example, as illustrated as an example of training processing in Fig. 12, at step S 110, the training processing section 52 acquires the first input data 3 (the pressure characteristic), the second input data 4 (the electrical characteristic), and the output data 6 (performance indicator) for each operation cycle that is the training data resulting from time series measurement for the rubber actuator 2. At step S112, the training processing section 52 generates the learning model 51 using the time series measurement results as the training data. Namely, a set of information is obtained for the weight parameters (weights or strengths) of inter-node connections of the training result as trained using the multiple training data as described above. Then at step S114, data expressed as a set of information of the weight parameters (weights or strengths) of inter-node connections of the training result is stored as the learning model 51.

Note that the generator 54 includes a function to generate an output that considers precedence relationships of time series input, and although a description has been given above of an example in which a recurrent neural network is employed, the technology disclosed herein is not limited to employing a recurrent neural network. Namely, the technology disclosed herein may employ another method that includes a function to generate an output that considers precedence relationships of time series input.

The elastic body performance estimation device 1 employs as the learning model 51 the trained generator 54 generated by the method given as an example above (namely, the data represented by a set of information of the weight parameters of inter-node connections of the training result). Employing the sufficiently trained learning model 51 means that, for a rubber actuator that deforms in a nonlinear manner, it is not impossible to estimate a performance state (performance indicator) from the pressure characteristic configured by a time series of the pressure values and the electrical characteristic configured by a time series of electrical resistance values for operation cycle units. Namely, as a performance state derived from the pressure characteristic and the electrical characteristic of operation cycling of the estimation target rubber actuator 2, the elastic body performance estimation device 1 is able to estimate as an output the performance indicator for one or other out of the initial state, the intermediate state, and the later state.

Note that the processing by the training processing section 52 is an example of processing of a learning model generation device of the present disclosure. Moreover, the elastic body performance estimation device 1 is an example of an estimation section and estimation device of the present disclosure.

The elastic body performance estimation device 1 described above is, for example, able to be implemented by causing a program representing each of the above functions to be executed in a computer.

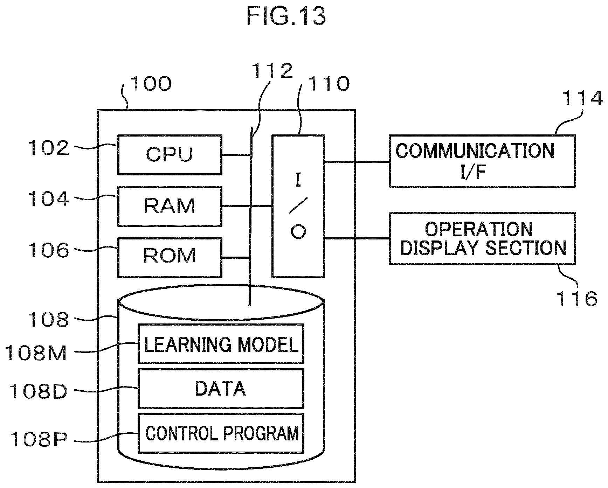

Fig. 13 illustrates an example of a case configured including a computer as an execution device to execute processing to implement each function of the elastic body performance estimation device 1.

The computer that functions as the elastic body performance estimation device 1 illustrated in Fig. 13 includes a computer main body 100. The computer main body 100 includes a CPU 102, RAM 104 such as volatile memory or the like, ROM 106, an auxiliary storage device 108 such as a hard disk device (HDD), and an input-output interface (I/O) 110. The CPU 102, the RAM 104, the ROM 106, the auxiliary storage device 108, and the input-output I/O 110 are configured so as to be connected together through a bus 112 so as to be capable of exchanging data and commands between each other. A communication interface (I/F) 114, and an operation display section 116 such as a display, keyboard, and the like are connected to the input-output I/O 110. The communication I/F 114 functions as an input-output section to input/output the first input data 3, the second input data 4, and the output data 6 from/to an external device.

A control program 108P to cause the computer main body 100 to function as the elastic body performance estimation device 1, serving as an example of the estimation device of the present disclosure, is stored in the auxiliary storage device 108. The CPU 102 reads the control program 108P from the auxiliary storage device 108, and expands and executes the processing of the control program 108P in the RAM 104. The computer main body 100 that has executed the control program 108P thereby operates as the elastic body performance estimation device 1 serving as an example of the estimation device of the present disclosure.

Note that a learning model 108M including the learning model 51, and data 108D including various data, is stored on the auxiliary storage device 108. The control program 108P may be configured so as to be provided by a recording medium such as a CD-ROM or the like.

Next, description follows regarding estimation processing in the elastic body performance estimation device implemented by a computer.

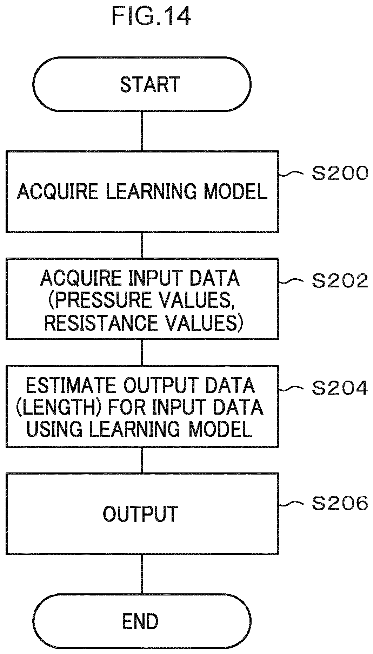

Fig. 14 illustrates an example of a flow of the estimation processing by the control program 108P as executed in the computer main body 100.

The estimation processing illustrated in Fig. 14 is executed by the CPU 102 when power source of the computer main body 100 is switched ON. Namely, the CPU 102 reads the control program 108P from the auxiliary storage device 108, and expands and executes the processing thereof in the RAM 104.

First at step S200, the CPU 102 acquires the learning model 51 by reading the learning model 51 from the learning model 108M of the auxiliary storage device 108 and expanding the learning model 51 in the RAM 104. More specifically, a network model configured by inter-node connections expressed by weight parameters is expanded as the learning model 51 in the RAM 104. The learning model 51 implemented by the inter-node connections with weight parameters is thereby built.

Next at step S202, the CPU 102 acquires, through the communication I/F 114, unknown first input data 3 (the pressure characteristic) and unknown second input data 4 (the electrical characteristic) to be subjected to estimation of a performance state of the rubber actuator 2. Namely, the pressure characteristic and the electrical characteristic under operation cycling on the rubber actuator 2 of unknown performance state are acquired.

Next as step S204. the CPU 102 uses the acquired learning model 51 to estimate the output data 6 (the performance indicator indicating the performance state of the rubber actuator 2) corresponding to the acquired first input data 3 (the pressure characteristic) and the acquired second input data 4 (the electrical characteristic).

Then at the next step S206, the output data 6 (performance indicator) of the estimation result is output through the communication I/F 114, and the current processing routine is ended.

Note that the estimation processing illustrated in Fig. 14 is an example of processing executed by the estimation method of the present disclosure.

As described above, for a rubber actuator 2 of unknown performance state, the present exemplary embodiment is able to estimate the performance state of the rubber actuator 2 from the first input data 3 (the pressure characteristic) and the second input data 4 (the electrical characteristic) of the rubber actuator 2 by operation cycling. Namely, inputting the pressure characteristic and the electrical characteristic of the rubber actuator 2 of unknown performance state by operation cycling enables a performance indicator for one out of the initial state, the intermediate state, and the later state to be estimated as the performance state of the rubber actuator 2. Thus by detecting the pressure values and the electrical resistance values of the rubber actuator 2 by operation cycling as a time series, the performance state of the rubber actuator 2 can be estimated, without the need to measure the performance state using a bulky apparatus. The present exemplary embodiment accordingly enables identification of the performance state of the rubber actuator 2 that has hitherto been difficult to identify by directly measuring the structure of the rubber actuator 2.

The estimation result of the estimated performance state of the rubber actuator 2 was then validated.

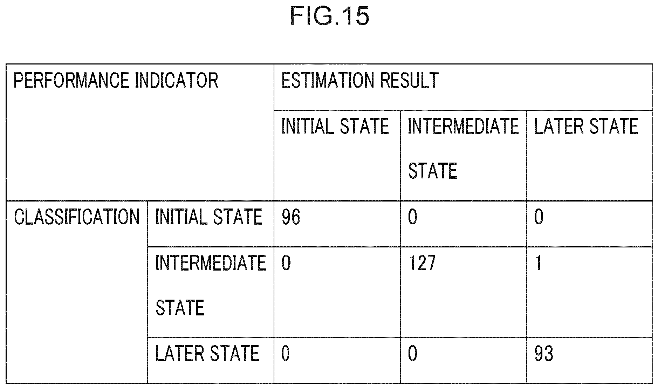

Fig. 15 illustrates validation results of the estimation result of the performance indicator as estimated from the pressure characteristic and the electrical characteristic by operation cycling as validated for plural rubber actuators 2.

In this validation, the number and size of flaw sites 216, such as cracks, (Fig. 3) occurring in the tube shaped body 212 was measured, and each of the plural rubber actuators 2 that has been classified into one or other performance indicator from out the initial state, intermediate state, and later state from the measurement results was treated as an estimation target. Then for each of the respective estimation target rubber actuators 2, the pressure characteristic and the electrical characteristic were acquired for operation cycling at the point of classification as described above, and the respective performance indicators were estimated. The estimation results of Fig. 15 indicate the number of correspondences between classification results from measurement, and estimation results from the pressure characteristic and the electrical characteristic of the operation cycle.

As illustrated in Fig. 15, confirmation was able to be made that there is an appropriate correspondence relationship between the classification results by measuring the rubber actuators 2, and the estimation results with the elastic body performance estimation device 1 described above.

### First Modified Example: Cycle Number

Although description has been given above regarding a case in which the performance indicator is estimated as a physical quantity indicating a performance state, the present disclosure is not limited thereto. For example, a cycle number in the operable range CtX or in the sustainable performance range CtY of a predetermined standard rubber actuator 2 may be estimated as the physical quantity indicating a performance state.

More specifically, the cycle number (cumulative cycle number) for the predetermined standard rubber actuator 2 may be substituted for the performance indicator of the output data 6 described above, and the learning model 51 may be generated by the training processing of the training processing section 52. Note that the cycle number (cumulative cycle number) of the standard rubber actuator 2 may be derived by computing an average value and standard deviation etc. of the operable range CtX or the sustainable performance range CtY of plural rubber actuators.

Adopting such an approach enables, by estimating the cycle number of the standard rubber actuator 2, quantitative confirmation of the performance state when the performance state of the estimation target rubber actuator 2 is estimated from the cycle number (cumulative cycle number) of the operation cycles.

### Second Modified Example: Lifespan Estimation

Although description above is of a case in which the performance indicator or the cycle number is estimated as the physical quantity indicating the performance state, the present disclosure is not limited thereto. For example, information indicating the lifespan of the rubber actuator 2 may be estimated as the physical quantity indicating the performance state.

More specifically, an estimation of the cycle number of the standard rubber actuator 2 described above may be employed, so as to apply a number of operable cycles of the estimation target rubber actuator 2 as a product lifespan indicator. For example, the end cycle number Cte of the standard rubber actuator 2 described above may be pre-stored in memory, and a remaining number of cycles at the time of estimating the performance state for the estimation target rubber actuator 2, which results from subtracting the estimated cycle number from the end cycle number Cte, may be applied as the product lifespan indicator.

Estimating the lifespan of the rubber actuator 2 in this manner enables the number of cycles of operation cycling remaining, namely the lifespan, to be quantitatively confirmed for the estimation target rubber actuator 2. This thereby enables, for example, a time prior to a flaw occurring in the estimation target rubber actuator 2 to be set for performing maintenance, such as replacement.

Note that when a multi-level performance indicator having 4 or more levels is applied for the performance indicator of 3 levels in the example described, this may still be applied as information to indicate the lifespan of the rubber actuator 2. Namely, an estimated performance indicator identifying a level until the end cycle number Cte may be employed as information indicating the lifespan of the rubber actuator 2.

### Third Modified Example: Estimation by Electrical Characteristic Alone

In the above description, the performance state of the rubber actuator 2 was estimated for the rubber actuator 2 of unknown performance state from the first input data 3 (the pressure characteristic) and the second input data 4 (the electrical characteristic) by performing operation cycling on the rubber actuator 2. The technology disclosed herein is not limited to employing both the pressure characteristic and the electrical characteristic as the input data. For example, in cases in which the estimation target rubber actuator 2 is operated by operation cycling under a predetermined routine pressure characteristic, this pressure characteristic may be pre-stored, and the stored pressure characteristic then employed so as to enable the first input data 3 (the pressure characteristic) to be omitted.

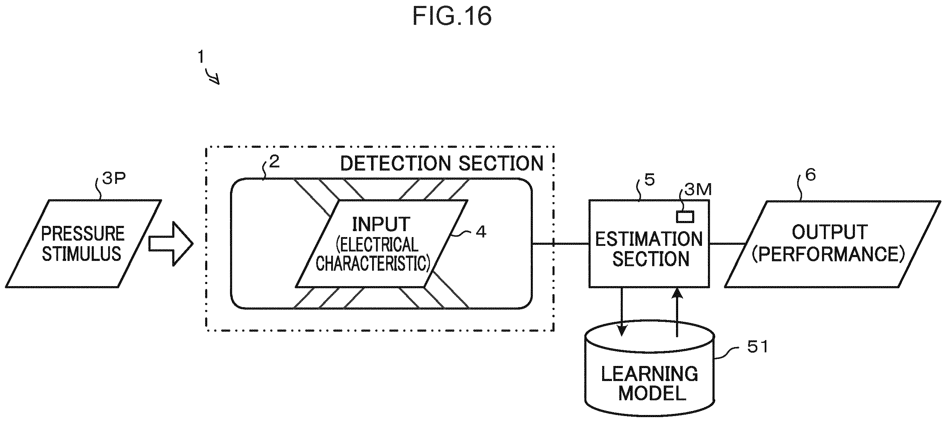

More specifically, as illustrated in Fig. 16, information 3M indicating the first input data 3 (the pressure characteristic) may be stored in the estimation section 5. Adopting such a configuration enables the performance state to be estimated by acquiring only the electrical characteristic, as the second input data 4, when a pressure stimulus 3P has been imparted to the estimation target rubber actuator 2.

### Second Exemplary Embodiment

Next, description follows regarding a second exemplary embodiment. The second exemplary embodiment considers an improvement in the estimation speed when estimating the performance state of the rubber actuator 2. Note that due to the second exemplary embodiment being configured substantially the same as the first exemplary embodiment, the same reference numerals will be appended to the same portions and detailed explanation thereof will be omitted.

In a general recurrent neural network, information of the weight parameters is optimized for respective connections of the inter-node connections from the input layer 540 to the middle layer 542, the inter-node connections and feedback connections in the middle layer 542, and the inter-node connections from the middle layer 542 to the output layer 544 (Fig. 11). However, there is a need for extensive time for training when training using time series data having temporal correlations for the rubber actuator 2 that deforms in a nonlinear manner. Moreover, there is also a need for extensive memory in order to perform backpropagation through time when training using time series training data.

With an object of suppressing such extensive time being needed for training time, a well-known network model called reservoir computing may be employed to estimate a length of the rubber actuator 2 that deforms in a nonlinear manner. Network models called reservoir computing (RC) (hereafter referred to as RCNs) are themselves known technology, and so detailed explanation thereof will be omitted, however an example of an RCN is a network in which part of a recurrent neural network is fixed (switched to a random network), and only the inter-node connections from the middle layer 542 to the output layer 544 are optimized.

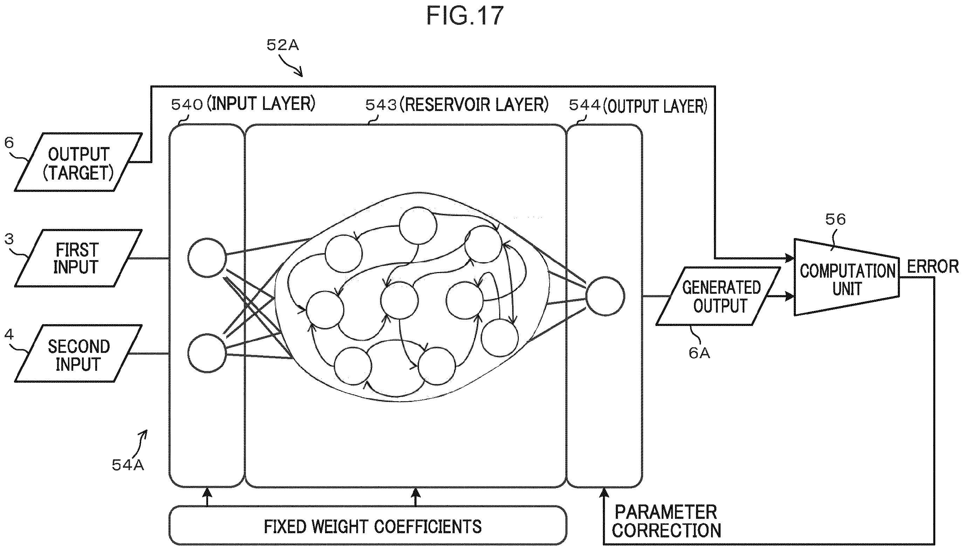

Description follows regarding training processing performed in a training processing section 52A employing an RCN, with reference to Fig. 17. The training processing section 52A illustrated in Fig. 17 differs from the training processing section 52 illustrated in Fig. 11 in the point that a generator 54A is substituted for the generator 54 illustrated in Fig. 11, and training is performed so as to reflect the errors derived by the computation unit 56 only in the output layer 544 side.

As illustrated in Fig. 17, the generator 54A of the training processing section 52 configures a known RCN including an input layer 540 similar to that of Fig. 11, a reservoir layer 543 configured similarly to in Fig. 11 as a substitute for the middle layer 542 of Fig. 11, and an output layer 544 similar to that of Fig. 11. In the RCN, fixed weight parameter information (hereafter referred to as weight coefficients) are set for the inter-node connections from the input layer 540 to the reservoir layer 543, and for the inter-node connections and feedback connections in the reservoir layer 543. The inter-node connections from the reservoir layer 543 to the output layer 544 are, for example, configured by linear combinations, and the respective weight parameters are optimized by training with the training data.

Note that fixed weight coefficients are coefficients that are pre-set. For these fixed weight coefficients, coefficients determined as initial values may be set. The fixed weight coefficients may be set as weight coefficients for cases in which training data is employed, and the inter-node connections and the like are optimized using the training-data output data 6 as the target so as to minimize error between the generated output data 6A and the training-data output data 6 by optimization performed either a specific number of times or for a specific duration that is insufficient for the errors to be minimized completely.

The weight parameters that define the inter-node connections from the reservoir layer 543 to the output layer 544 are derived by using multiple training data so as to train to minimize errors between the generated output data 6A and the training-data output data 6.

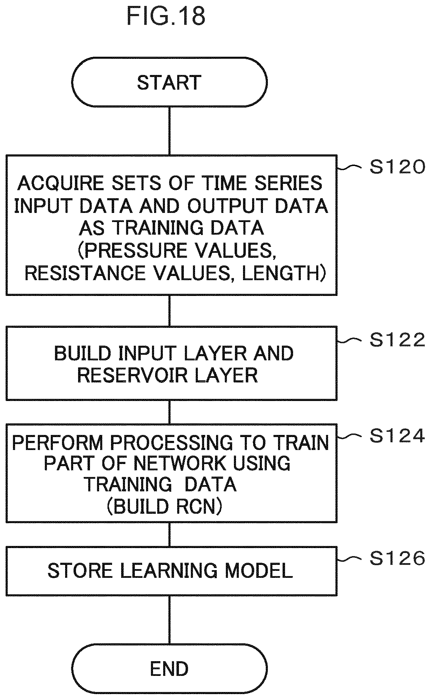

The training processing section 52A including the generator 54A may be configured by a computer including a non-illustrated CPU to execute the training processing. For example, as in the example of the training processing of the Fig. 18, the training processing section 52A acquires the first input data 3 (the pressure characteristic), the second input data 4 (the electrical characteristic), and the output data 6 (performance indicator) as the training data (step S120), and builds the input layer 540 and the reservoir layer 543 (step S122). Similar to the generator 54 of Fig. 11, part of the training data is employed to perform the training processing. More specifically, a set of information of weight parameters for the inter-node connections of the training result trained using the part of the training data is obtained, and the inter-node connections from the input layer 540 to the reservoir layer 543 and the inter-node connections and feedback connections in the reservoir layer 543 are derived as weight coefficients. The input layer 540 and the reservoir layer 543 are built by identifying the input layer 540 and the reservoir layer 543 using the derived weight coefficients.

Next, the training processing section 52A employs multiple training data of results measured in time series to generate the learning model 51 (step S124). Namely, the RCN is built by training only the inter-node connections from the reservoir layer 543 to the output layer 544, and then obtaining a set of information about the weight parameters of the inter-node connections of the training result. Data expressed as a set of the weight coefficients derived at step S 122 and information about the weight parameters of the inter-node connections of the training result of step S124 is stored as the learning model 51 (step S126).

In the elastic body performance estimation device 1 described above, the generator 54A that has been generated and trained is employed as the learning model 51. Namely, the weight coefficients expressing the inter-node connections from the input layer 540 to the reservoir layer 543 and the inter-node connections and feedback connections in the reservoir layer 543, and the weight parameters expressing the inter-node connections from the reservoir layer 543 to the output layer 544, correspond to the learning model 51. Employing the sufficiently trained learning model 51 means that it is not impossible to estimate a performance indicator from the pressure characteristic and the electrical characteristic by operation cycling for a rubber actuator that deforms in a nonlinear manner.

As described above, the present exemplary embodiment optimizes the learning model 51 built with a network using an RCN instead of a general recurrent neural network. This thereby enables the required training time to be suppressed compared to building a learning model using a general recurrent neural network. Moreover, this also enables a need for an extensive memory (memory capacity) that would be needed to perform backpropagation through time as in a general recurrent neural network to be suppressed.

### Third Exemplary Embodiment

Next, description follows regarding a third exemplary embodiment. The third exemplary embodiment considers improving the training effect of the learning model 51 for estimating the performance state of the rubber actuator 2. Note that due to the third exemplary embodiment being configured substantially the same as the first exemplary embodiment and the second exemplary embodiment, the same reference numerals will be appended to the same portions and detailed explanation thereof will be omitted.

As described above, it is possible to suppress training time by employing an RCN in which part of a recurrent neural network is fixed. However, sometimes the effect of training is insufficient in cases in which fixed weight parameters are employed for the inter-node connections from the input layer 540 to the reservoir layer 543 and for the inter-node connections and feedback connections in the reservoir layer 543. This is because even when the weight parameters of the inter-node connections from the reservoir layer 543 to the output layer 544 are trained, the limited number of individual nodes in the reservoir layer 543 are set with the fixed weight parameters, and sometimes output from the reservoir layer 543 is not an output sufficient for optimization. Adopting a more complex structure for the recurrent neural network using the reservoir layer 543 might be envisaged, however this is not preferable due to the time needed to set the reservoir layer 543.

However, as is well known, reservoir computing (RCN) projects an input onto high dimension feature space by nonlinear conversion into high dimension space. In regard to this point, a known approach is to employ a nonlinear dynamic system in the reservoir layer 543 instead of a recurrent neural network in a network model called physical reservoir computing (PCR) (hereafter referred to as PRCN). Due to PRC and PRCN both themselves being known technology, detailed explanation thereof will be omitted, however they may be utilized to retain data related to deformation of the rubber actuator 2 that deforms in a nonlinear manner in the reservoir layer 543. Namely, the PRCN is appropriately applicable to estimating a performance state of the rubber actuator 2 that deforms in a nonlinear manner.

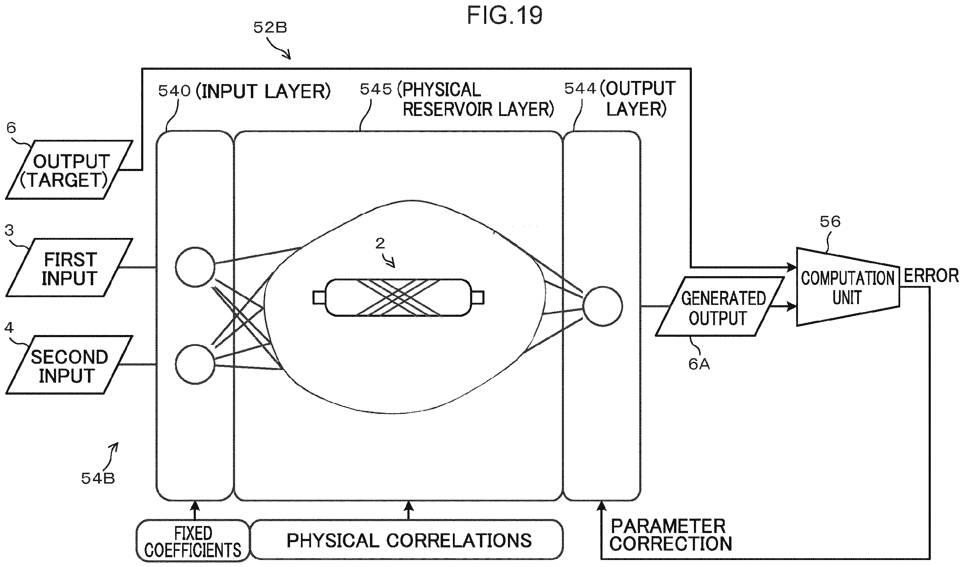

Explanation follows regarding training processing in a training processing section 52B, with reference to Fig. 19. The training processing section 52B illustrated in Fig. 19 differs from the training processing section 52A illustrated in Fig. 17 in the point that the generator 54B is substituted for the generator 54A illustrated in Fig. 17, and training is performed to reflect errors derived by the computation unit 56 only on the output layer 544 side.

As illustrated in Fig. 19, the generator 54B of the training processing section 52B is configured by a known PRCN that includes an input layer 540 similar to in Fig. 11, a physical reservoir layer 545 substituted for the reservoir layer 543 of Fig. 17, and an output layer 544 similar to in Fig. 11. PRCNs themselves are known technology and so detailed explanation thereof will be omitted, however in the PRCN, the fixed weight coefficients are set as described above for the connections of the nodes from the input layer 540 to the reservoir layer 543. The physical reservoir layer 545 is configured to retain feature values for multiple time series of correlations and to output plural feature values close to the input. The inter-node connections from the physical reservoir layer 545 to the output layer 544 are, for example, linear combinations, and respective weight parameters are optimized by training so as to minimize errors between the generated output data 6A and the training-data output data 6 using multiple training data.

Note that the fixed weight coefficients, as described above, may be setting of fixed coefficients as initial values, and may be setting of weight coefficients in cases in which training data is employed for optimization performed only a specific number of times or for a specific duration.

The physical reservoir layer 545 retains multiple physical correlations in time series of the rubber actuator 2, extracts from the input layer 540 a performance state (performance indicator) corresponding to input data (the pressure characteristic and the electrical characteristic) close to the unknown input data (the pressure characteristic and the electrical characteristic), and outputs these as plural feature values to the output layer 544. Roughly speaking, multiple correlations of the performance indicator, which is the performance state, against the pressure characteristic and the electrical characteristic that change in time series by operation cycling, are stored as the behavior of the rubber actuator 2, and respective performance states (performance indicators) of the plural rubber actuators 2 close to the unknown input (the pressure characteristic and the electrical characteristic) are selected and output as feature values. This thereby enables execution of complex calculations to be suppressed.

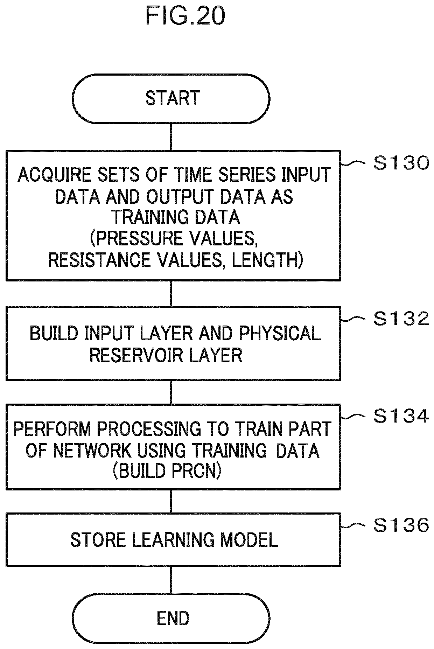

The training processing section 52B including the generator 54B may be configured including a computer including a non-illustrated CPU that executes the training processing. For example, as illustrated in an example of the training processing in Fig. 20, the training processing section 52B acquires the first input data 3 (the pressure characteristic), the second input data 4 (the electrical characteristic), and the output data 6 (performance state) that are the training data of the results of time series measurement (step S130), and builds the input layer 540 and the physical reservoir layer 545 (step S132). The input layer 540 sets predetermined weight coefficients. Thus the input layer 540 is built by identifying the connections of nodes from the input layer 540 to the physical reservoir layer 545 by predetermined weight coefficients. However, the physical reservoir layer 545 retains multiple correlations, namely of the performance state against the pressure characteristic and the electrical characteristic, for respective operation cycles of the respective training data. This means that the physical reservoir layer 545 retains, as feature values from the training data, correlations of a length that is a nonlinear behavior against the pressure values and electrical resistance values that change in time series, and from out of these builds a configuration so as to output plural feature values close to the input.

Next at step S134, the training processing section 52B generates the learning model 51 employing the multiple training data of the results measured in time series. Namely, a PRCN is built by training only the inter-node connections from the physical reservoir layer 545 to the output layer 544, and obtaining a set of information of weight parameters of the inter-node connections of the training result. Next data expressed by the weight coefficients derived at step S132 and sets of information of weight parameters of the inter-node connections of the training result of step S134 are stored as the learning model 51 (step S136).

Then in the elastic body performance estimation device 1 described above the generated and trained generator 54B is employed as the learning model 51. Namely, weight parameters expressing the connections of nodes from the input layer 540 to the physical reservoir layer 545, the physical reservoir layer 545, and the inter-node connections from the physical reservoir layer 545 to the output layer 544 correspond to the learning model 51.

In response to the pressure characteristic and the electrical characteristic of the rubber actuator 2 under operation cycling, which is unknown input data, the elastic body performance estimation device 1 extracts, from out of the physical correlations to time series of the rubber actuator 2 retained in the physical reservoir layer 545, a performance state (performance indicator) corresponding to input data (the pressure characteristic and the electrical characteristic) close to the unknown input data (the pressure characteristic and the electrical characteristic) from the input layer 540, and outputs these as plural feature values to the output layer 544. The output layer 544 then uses the plural feature values from the physical reservoir layer 545 to estimate the performance state (performance indicator) of the rubber actuator 2 using the trained weight parameters, such as by linear combination for example. Using the sufficiently trained learning model 51 means that it is not impossible to estimate a performance state (performance indicator) from the pressure characteristic and the electrical characteristic for the rubber actuator 2.

As described above, the present disclosure builds a network using a PRCN instead of an RCN, and optimizes the learning model 51. An improvement is accordingly achieved in the training effect of the learning model 51 compared to a case in which the learning model is built with an RCN.

This thereby enables extremely close estimation of the length of the rubber actuator 2 to the length of the actual rubber actuator 2 by optimizing the learning model 51 built with a network by PRCN instead of RCN.

As described above, in the present disclosure a case has been described of application of the present disclosure to a rubber actuator as a member, however obviously the member is not limited to being a rubber actuator. Moreover, a case has been described in which there are at least 3 different types of physical quantity that change according to deformation of the member, with the pressure values expressing the magnitude of pressure as the first physical quantity, the electrical resistance values expressing the magnitude of the electrical characteristic as the second physical quantity, and the length expressing the magnitude of deformation as the target physical quantity, and with the length being estimated from the pressure value and electrical resistance value. However, each of the first physical quantity, the second physical quantity, and the target physical quantity are not limited thereto, and the pressure values or the electrical resistance values may be set as the target physical quantity.

Although a description has been given in terms of the exemplary embodiments, the technical scope of the present disclosure is not limited to the ranges of the exemplary embodiments described above. Various modifications and improvements may be made to the above exemplary embodiments within a scope not departing from the spirit of the present disclosure, and embodiments including such modifications and improvements are contained in the technical scope of the present disclosure.

Moreover, although in the above exemplary embodiments, processing for a case implemented by processing of a software configuration has been described using a flowchart, there is no limitation thereto, and, for example, an embodiment may be adopted in which each processing is implemented by a hardware configuration.

Moreover, part of the elastic body performance estimation device, for example a neural network such as a learning model or the like, may be configured as a hardware circuit.

The entire content of the disclosure of Japanese Patent Application No. 2021-080622 filed on May 11, 2021 is incorporated by reference in the present specification. All publications, patent applications and technical standards mentioned in the present specification are incorporated by reference in the present specification to the same extent as if each individual publication, patent application, or technical standard was specifically and individually indicated to be incorporated by reference.

## Claims

1. An estimation device comprising an estimation section that:
inputs a physical quantity indicating a plurality of member characteristics for an estimation target member into a learning model that:
employs, as training data, a plurality of sets of a physical quantity indicating a plurality of member characteristics of different types which change in time series according to deformation of a linearly- or nonlinearly-deforming member and a plurality of sets of a physical quantity indicating a performance state related to deformation of the member, and
has been trained by being input with physical quantities indicating the plurality of member characteristics so as to output physical quantities indicating the performance state related to deformation of the member; and
estimates a physical quantity indicating a performance state related to deformation of the estimation target member.

2. The estimation device of claim 1, wherein:
the member has an electrical characteristic that changes according to the deformation;
the physical quantity indicating the plurality of member characteristics includes a first physical quantity that indicates a pressure characteristic for deforming the member and a second physical quantity that indicates the electrical characteristic that changes according to the deformation of the member;
the physical quantity indicating the performance state related to deformation of the member includes a third physical quantity that indicates a number of repetitions of deformation of the member; and
the learning model is trained so as to output the third physical quantity with the first physical quantity and the second physical quantity as inputs.

3. The estimation device of claim 2, wherein:
the member includes an elastic body that is formed with a hollow inside and that generates a contraction force in a specific direction due to a pressurized fluid being supplied to the hollow inside;
the first physical quantity is a pressure characteristic indicating a plurality of pressure values in a time series in a case in which the pressurized fluid is supplied and supply of the pressurized fluid is cancelled;
the second physical quantity is an electrical characteristic indicating a plurality of electrical resistance values in a time series of the elastic body, which change according to the first physical quantity; and
the third physical quantity is a performance indicator indicating a performance state for a plurality of respective repetition number groups that result from dividing a predetermined specific number of repetitions, as a physical quantity indicating a performance state of the member while deformable and sustaining a specific performance, into a plurality of levels.

4. The estimation device of claim 2, wherein:
the member includes an elastic body that is formed with a hollow inside and that generates a contraction force in a specific direction due to a pressurized fluid being supplied to the hollow inside;
the first physical quantity is a pressure characteristic indicating a plurality of pressure values in a time series in a case in which the pressurized fluid is supplied and supply of the pressurized fluid is cancelled;
the second physical quantity is an electrical characteristic indicating a plurality of electrical resistance values in a time series of the elastic body, which change according to the first physical quantity; and
the third physical quantity is a product lifespan indicator that indicates a performance state from a performance state at the number of repetitions of deformation of the member until a predetermined specific number of repetitions as a performance state of the member while deformable and sustaining a specific performance.

5. The estimation device of any one of claim 1 to claim 4, wherein the learning model is a model generated by training using a recurrent neural network.

6. The estimation device of any one of claim 1 to claim 5, wherein the learning model is a model generated by training using a network by reservoir computing.

7. The estimation device of any one of claim 1 to claim 5, wherein the learning model is a model generated by training using a network by physical reservoir computing employing a reservoir accumulated with a plurality of sets of a physical quantity indicating an operation state of the member, a plurality of sets of a physical quantity indicating a member characteristic that changes according to the deformation, and a plurality of sets of a physical quantity indicating a performance of the member.

8. An estimation method comprising:
by a computer,
inputting a physical quantity indicating a plurality of member characteristics for an estimation target member into a learning model that:
employs, as training data, a plurality of sets of a physical quantity indicating a plurality of member characteristics of different types which change in time series according to deformation of a linearly- or nonlinearly-deforming member and a plurality of sets of a physical quantity indicating a performance state related to deformation of the member, and
has been trained by being input with physical quantities indicating the plurality of member characteristics so as to output physical quantities indicating the performance state related to deformation of the member; and
estimating a physical quantity indicating a performance state related to deformation of the estimation target member.

9. A program that causes a computer to function as an estimation section that:
inputs a physical quantity indicating a plurality of member characteristics for an estimation target member into a learning model that:
employs, as training data, a plurality of sets of a physical quantity indicating a plurality of member characteristics of different types which change in time series according to deformation of a linearly- or nonlinearly-deforming member and a plurality of sets of a physical quantity indicating a performance state related to deformation of the member, and
has been trained by being input with physical quantities indicating the plurality of member characteristics so as to output physical quantities indicating the performance state related to deformation of the member; and
estimates a physical quantity indicating a performance state related to deformation of the estimation target member.

10. A learning model generation device comprising:
an acquisition section that acquires a plurality of sets of:
a physical quantity indicating a plurality of member characteristics of different types which change in time series according to deformation of a linearly- or nonlinearly-deforming member, and
a physical quantity indicating a performance state related to deformation of the member; and
a learning model generation section that, based on results of the acquisition by the acquisition section, generates a learning model that is input with physical quantities indicating the plurality of member characteristics, and that is trained so as to output physical quantities indicating the performance state related to deformation of the member.
